# EUROPEAN PATENT APPLICATION

(11) **EP 4 012 321 A1**
(43) Date of publication of application: **15.06.2022**
(21) Application number: 20461589.2
(22) Date of filing: 10.12.2020
(51) Int. Cl.: F28F 9/00, B60R 19/52, F24F 13/08, F28D 21/00, F28F 19/00, F28F 19/01

(54) **A HEAT EXCHANGER PROTECTION SYSTEM**

(71) Applicant: Valeo Autosystemy SP. Z.O.O., 32-050 Skawina (PL)
(72) Inventor: GODZINA, Radoslaw, 320505 SKAWINA (PL); SZOSTEK, Dawid, 32 050 SKAWINA (PL); FERLAY, Benjamin, 85774 Unterfoehring (DE)
(74) Representative: Valeo Systèmes Thermiques

(57) **Abstract**

A heat exchanger protection system (100) includes at least one of a protection device (110) and a filter (40). The protection device (110) includes at least one grid (10, 20) disposed upstream of a heat exchanger (200) in direction of ram air and in contact with the heat exchanger (200). The filter (40) is in contact with the grid (10, 20).

## Description

The present invention relates to a heat exchanger protection system. In particular, the present invention is relates to a heat exchanger protection system used in a vehicle.

Generally, a conventional heat exchanger includes an inlet tank and an outlet tank connected by tubular elements. The inlet tank receives a first heat exchange fluid therein. The tubular elements connect the inlet tank and the outlet tank and configure fluid communication between the inlet tank and the outlet tank. The tubular elements are spaced apart from each other. The tubular elements may be disposed alternately with fins to define a heat exchanger core. As the first heat exchange fluid received in the inlet tank flows through the tubular elements, the first heat exchange fluid undergoes heat exchange with a second heat exchange fluid flowing around and across the tubular elements. The fins disposed around the tubular elements enhance turbulence in the second heat exchange fluid around the tubular elements and improve the surface contact between the second heat exchange fluid and the tubular elements. The first heat exchange fluid after passing through the tubular elements and after undergoing heat exchange is collected in the second tank. The second tank is in fluid communication with an outlet pipe for egress of the first heat exchange collected in the second tank after the first heat exchange fluid had undergone heat exchange by passing through the tubular elements.

As the fins and the tubular elements forming the heat exchanger core are of aluminum, the heat exchanger core is prone to damage due to any article such as stone striking the heat exchanger core. Damage to the heat exchanger core, such as the tubular elements, may cause leakage whereas damage to the fins may render the fins ineffective in extracting heat from the fluid flowing through the tubular elements and performing it's function, in both cases efficiency and performance of the heat exchanger is deteriorated. In order to prevent damage to the heat exchanger core, a protection element, generally in form of a grid is disposed upstream of the heat exchanger in direction of ram air. Preferably, the protection element is mounted on the heat exchanger by using a first set of mounting elements.

Generally, other auxiliary elements such as filter may also required to be mounted on the heat exchanger. More specifically, with rising scarcity of petrol and diesel and pollution issues arising with use of internal combustion engine powered vehicles, electric and hybrid vehicles are being preferred and considered as future mobility option. Hybrid vehicles utilize more than one power source for operation thereof, for example some hybrid vehicles utilize power generated from fuel cells apart from power generated by internal combustion engine for operation thereof. The fuel cell utilizes oxygen and hydrogen supplied thereto to generate electricity. Generally, the fuel cell utilizes oxygen from air supplied thereto. The fuel cell mounted on the hybrid vehicle requires filter to purify the air entering the fuel cell for efficient operation of the fuel cell.

The filter is such a component that requires frequent maintenance, i.e. servicing and replacement thereof. Further, separate mounting elements are required for mounting the filter.

Accordingly, there is a need for a protection system that provides access to and permits quick and convenient removal of a filter for maintenance thereof without requiring overly cumbersome dis-assembly of the components of a vehicle. Further, there is a need for a protection system that securely holds a filter in place without requiring separate dedicated mounting elements for mounting of the filter. Further, there is a need for a protection system that is simple in construction and convenient to assemble and use. Furthermore, there is a need for a protection system that requires fewer parts and mounting elements compared to conventional protection system.

An object of the present invention is to obviate drawbacks associated with conventional protection systems.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

The protection system includes at least one of a protection device and a filter. The protection device includes at least one grid disposed upstream of a heat exchanger in direction of ram air and in contact with at least a portion of the heat exchanger. The filter is in contact with the grid.

The protection device of the protection system includes a first grid and a second grid. The first grid is disposed upstream of the heat exchanger in direction of ram air and in contact with at least a portion of the heat exchanger. The second grid is mounted in a spaced apart configuration with respect to the first grid to form a cavity there between. The cavity receives the filter therein. The second grid further protects the heat exchanger as well as the filter from impact of an article projected thereat.

Generally, at least one of the first grid and the second grid is of metal.

Alternatively, at least one of the first grid and the second grid is of plastic.

In accordance with an embodiment of the present invention, the first grid and the second grid can be linearly moved relative to each other.

Further, the first grid and the second grid can be angularly moved relative to each other by virtue of at least one hinge joint formed there-between.

Alternatively, the first grid and the second grid can swivel relative to each other by virtue of at least one swivel joint formed there-between.

Further, at least one of the first grid and the second grid includes a plurality mounting elements to mount at least one of the first grid and the second grid over the heat exchanger.

Furthermore, at least one of the first grid, the second grid and the heat exchanger includes at least one support element for supporting at least one of the first grid and the second grid on the heat exchanger.

Still further, the protection system includes an opening along at least a portion of the periphery thereof for entry of the filter into the cavity and removal of the filter from the cavity.

In addition, the protection system includes at least one retaining element to retain the filter element inside the cavity.

Generally, the protection system includes at least two side elements axially extending from sides of at least one of the first grid and the second grid to detachably connect the first grid to the second grid and maintain the first grid and the second grid in spaced apart configuration.

Specifically, the side elements are adjustable to adjust spacing between the first grid and the second grid.

At least one of the first grid, the second grid and the side elements include at least one guide element to guide receiving of the filter inside the cavity.

Further, the protection system includes the filter received inside the cavity.

The filter includes an engagement element that is complimentary to and interacts with the at least one guide element configured inside a cavity of the protection device of the protection system as disclosed above.

Generally, the filter includes a pulling element to pull out the filter out of the cavity.

A heat exchanger assembly includes a heat exchanger and a protection system. The protection system includes a protection device. The protection device includes a first grid and a second grid. The first grid is disposed upstream of the heat exchanger in direction of ram air and is in contact with at least a portion of the heat exchanger. The second grid is mounted in a spaced apart configuration with respect to the first grid to form a cavity there-between. The cavity receives a filter therein. The second grid protects the heat exchanger and the filter from impact of an article projected thereat.

Alternatively, the protection device includes at least one grid of micro-fiber material that is in contact with at least a portion of the heat exchanger and acts as filter for filtering air crossing there through.

There is also disclosed a heat exchanger assembly in accordance with another embodiment of the present invention. The heat exchanger assembly includes a heat exchanger and a protection system. The protection system includes a protection device. The protection device includes at least one grid of micro-fiber material that is in contact with at least a portion of the heat exchanger and acts as filter for filtering air crossing there through.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates an exploded view of a heat exchanger assembly in accordance with an embodiment of the present invention;
**FIG. 2** illustrates a schematic representation of a protection device in accordance with an embodiment of the present invention, also is illustrated an enlarged view of a mesh forming a second grid of the protection device;
**FIG. 3** illustrates a schematic representation of a top view of a protection system arranged with respect to a heat exchanger of the heat exchanger assembly of **FIG. 1****,** also is depicted enlarged view of a filter received in a cavity of the protection device and interacting with a guide element of the protection device;
**FIG. 4a** illustrates another schematic representation of the protection system of **FIG. 3****,** wherein a filter is received in the cavity formed in the protection device, also is depicted a restraining element in a blocking configuration;
**FIG. 4b** illustrates a schematic representation of the protection system of **FIG. 4a** with the restraining element in an unblocking configuration; and
**FIG. 5** illustrates a schematic representation of a protection system in accordance with another embodiment, wherein a protection device includes at least one grid of micro-fiber material that acts as filter.

The present invention envisages a protection system for a heat exchanger assembly, such as for example a radiator mounted in front of a vehicle. The protection system includes at least one of a protection device and a filter. The protection device includes at least one grid disposed upstream of a heat exchanger in direction of ram air and in contact with the heat exchanger. The protection device apart from protecting the heat exchanger also forms a cavity to hold an auxiliary element, such as for example a filter. More specifically, the protection device includes a first grid and a second grid. The first grid is disposed upstream of the heat exchanger in direction of ram air and is in contact with the heat exchanger. The first grid and the second grid protects the heat exchanger from impacts. The second grid is mounted in a spaced apart configuration with respect to the first grid and upstream of the first grid in the direction of ram air to form the cavity there-between. The filter can be received, securely held and removed from the cavity for service and maintenance thereof without inconvenience of requiring removal of protection grid of the protection device to access the filter as is in the case of conventional protection system, wherein the filter is disposed between the protection device and the heat exchanger. Accordingly, the protection device of the present invention provides convenient and quick, access and removal of the filter for service and maintenance thereof. However, the protection device with the cavity formed therein is not limited for receiving, securely holding, accessing and removing filter and the same can be used for receiving, securely holding and removing any other auxiliary element that is required to be mounted along with the heat exchanger and is required to be frequently accessed for service and maintenance thereof. Alternatively, the protection device includes at least one grid of micro-fiber material that itself acts as filter. Accordingly, the number of components is reduced as the grid acts as filter. Also with such configuration, the number of mounting elements and the number of mounting holes formed on the filter, the heat exchanger and the protection element is reduced, thereby reducing stress concentrations and mechanical failure caused by the stress concentration.

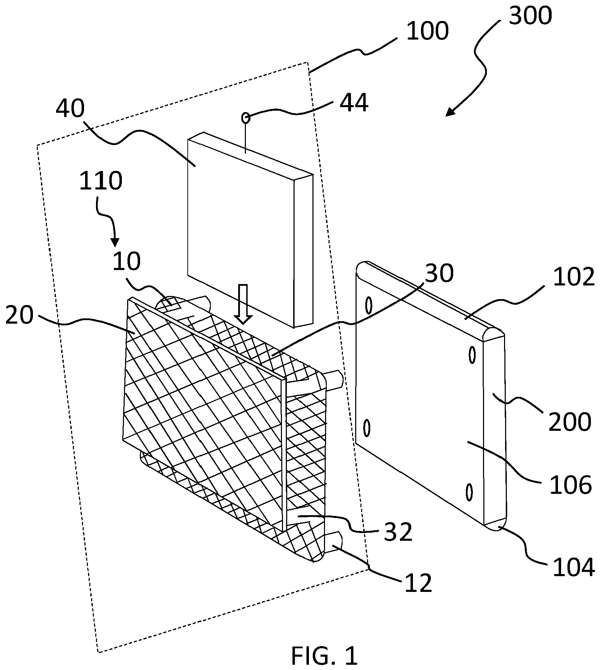

**FIG. 1** illustrates an exploded view of a heat exchanger assembly **300** in accordance with an embodiment of the present invention. The heat exchanger assembly **300** includes a heat exchanger **200** and a protection system **100** for shielding and protecting the heat exchanger **200** against impact of heavy articles such as stone or gravel projected at the heat exchanger **200.**

The heat exchanger **200** is generally a radiator mounted on a vehicle. The heat exchanger **200** includes an inlet tank **102,** an outlet tank **104** and a heat exchanger core **106.** The inlet tank **102** receives a first heat exchange fluid therein. The heat exchanger core **106** includes a plurality of spaced apart tubular elements and fins arranged alternatively with respect to each other. The tubular elements connect the inlet tank **102** and the outlet tank **104** to configure fluid communication between the inlet tank **102** and the outlet tank **104.** As the first heat exchange fluid received in the inlet tank **102** flows through the tubular elements, the first heat exchange fluid undergoes heat exchange with a second heat exchange fluid, specifically ram air flowing around and across the tubular elements. The fins disposed around the tubular elements enhance turbulence in the second heat exchange fluid around the tubular elements and improve the surface contact between the second heat exchange fluid and the tubular elements. Indirectly, the fins improve heat exchange between first heat exchange fluid flowing through the tubular elements and the second heat exchange fluid flowing around and across the tubular elements. The first heat exchange fluid after passing through the tubular elements and after undergoing heat exchange is collected in the outlet tank **104.** The outlet tank **104** is in fluid communication with an outlet pipe for egress of the first heat exchange collected in the outlet tank **104** after the first heat exchange fluid had undergone heat exchange by passing through the tubular elements.

Generally, the fins and the tubular elements forming the heat exchanger core **106** are of aluminum and the heat exchanger core **106** is prone to damage due to impact of any heavy articles such as stone striking the heat exchanger core **106.** Damage to the heat exchanger core **106,** such as for example, tubular elements of the heat exchanger core **106** may cause leakage whereas damage to the fins may render the fins ineffective in extracting heat from the first heat exchange fluid flowing through the tubular elements, in both cases efficiency and performance of the heat exchanger **200** is deteriorated.

In order to prevent damage to the heat exchanger core **106,** the protection system **100** is mounted on the heat exchanger **200,** such as for example radiator that is mounted on front of a vehicle. The protection system **100** includes at least one of a protection device **110** and a filter **40.** The protection device **110** includes at least one grid **10, 20** disposed upstream of a heat exchanger **200** in direction of ram air and in contact with at least a portion of the heat exchanger **200.** The filter **40** is in contact with the grid **10, 20.**

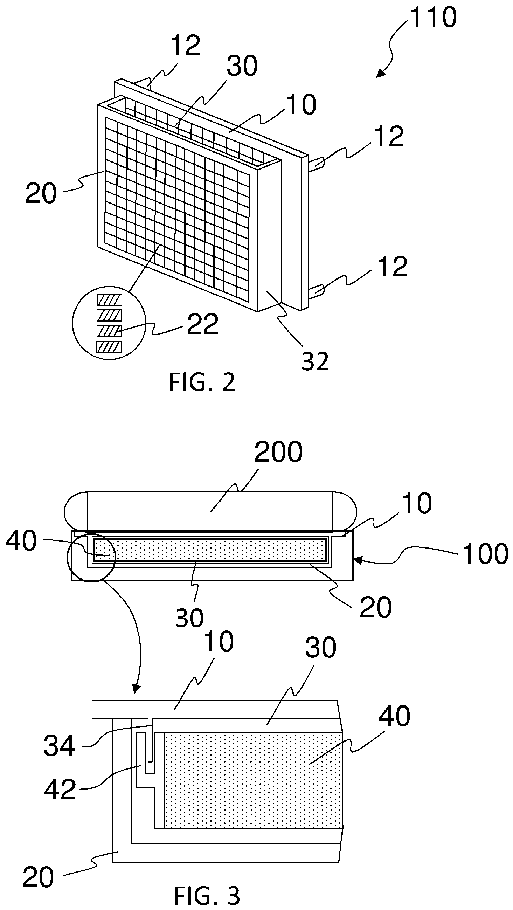

**FIG. 2** illustrates a schematic representation of the protection device of the protection system **100** in accordance with an embodiment of the present invention. Also, is illustrated an enlarged view of a mesh forming a second grid **20** of the protection device **110.** More specifically, the protection device **110** covers and shields the heat exchanger core **106** of the heat exchanger **200.** The protection device **110** includes a first grid **10** and the second grid **20.** The first grid **10** is disposed upstream of the heat exchanger **200** in direction of ram air and is in contact with at least a portion of the heat exchanger **200.** The second grid **20** is mounted in a spaced apart configuration with respect to the first grid **10** and upstream of the first grid **10** in direction of ram air to form a cavity **30** there between. The second grid **20** protects the heat exchanger **200** and the filter **40** from impact of an article projected thereat. More specifically, the first grid **10** and the second grid **20** shields and protects the heat exchanger **200** against impact of stone and gravel. More specifically, the first grid **10** and the second grid **20** are in the form of a mesh that acts as a shield to prevent a heavy article such as a stone or gravel from striking and damaging the delicate elements, particularly, tubular elements and fins of the heat exchanger core **106.** The mesh forming the first grid **10** and the mesh forming the second grid **20** can be of same sieve size or different sieve size. The meshed configuration of the first grid **10** and the second grid **20** allows ram air, acting as the second heat exchange fluid to pass there through and reach the heat exchanger **200,** particularly, the heat exchanger core **106.** The ram air or the second heat exchange fluid flowing across the heat exchanger core **106** undergoes heat exchange with first heat exchange fluid flowing through the tubular elements of the heat exchanger core **106.** However, the meshed configuration of the first grid **10** and the second grid **20** prevents heavier articles such as for example stone and gravel from reaching the heat exchanger core **106,** thereby shielding the heat exchanger core **106** against any damage from impact of stone and gravel. More specifically, the mesh allows air to pass there through but prevents the heavy articles such as stones and gravel from passing there through.

The at least one of the first grid **10** and the second grid **20** is of metal. Alternatively, the at least one of the first grid **10** and the second grid **20** is of plastic. However, the present invention is not limited to any particular configuration or material of the first grid **10** and the second grid **20** as far as the grids exhibit strength to withstand impact energy of articles striking the first grid **10** and the second grid **20.** More specifically, the present invention is not limited to any particular configuration or material of the first grid **10** and the second grid **20** as far as the grids are capable of shielding the heat exchanger core **106** by preventing heavy articles such as a stone or gravel from striking and damaging the heat exchanger core **106** and delicate elements thereof.

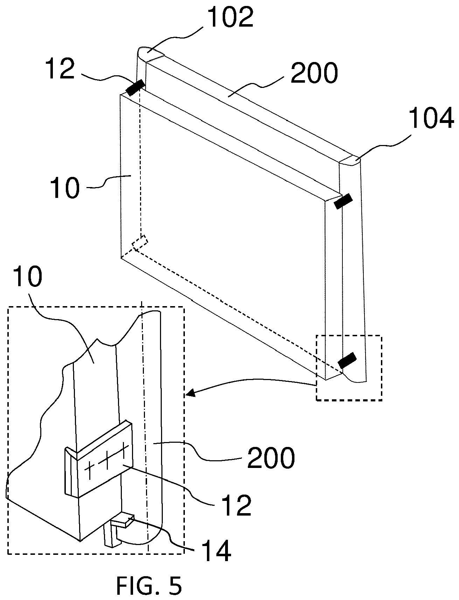

Generally, at least one of the first grid **10** and the second grid **20** includes a plurality mounting elements **12** to mount at least one of the first grid **10** and the second grid **20** over the heat exchanger **200.** Further, at least one of the first grid **10,** the second grid **20** and the heat exchanger **200** includes at least one support element **14** for supporting at least one of the first grid **10** and the second grid **20** on the heat exchanger **200.** Referring to the **FIG. 5****,** the support elements **14** formed on and extending from the heat exchanger **200** supports at least one of the first grid **10** and the second grid **20.** The support elements can also be formed on the first grid **10** and the second grid **20** and engages with complementary elements on the heat exchanger **200** for supporting at least one of the first grid **10** and the second grid **20** over the heat exchanger **200.** Furthermore, the protection device of the protection system **100** includes at least two side-elements **32** axially extending from sides of at least one of the first grid **10** and the second grid **20.** The at least two side-elements **32** detachably connect the first grid **10** to the second grid **20** and maintain the first grid **10** and the second grid **20** in spaced apart configuration with respect to each other. In one example, the first grid **10** is mounted on the heat exchanger **200** by means of the plurality mounting elements **12** formed on the first grid **10,** whereas the second grid **20** is connected to the first grid **10** by the at least two side elements **32.** Alternatively, the second grid **20** is mounted on the heat exchanger **200,** whereas the first grid **10** disposed between the second grid **20** and the heat exchanger **200** is connected to the second grid **20** by the at least two side elements **32.** Generally, the mounting elements **112** are bolts received within complimentary holes configured on the heat exchanger **200** and engaging with nuts.

Apart from protecting the heat exchanger **200,** the protection device **110** also forms the cavity **30** there between to hold an auxiliary element, such as for example a filter **40** therein. The filter **40** received in the cavity **30** formed between the first grid **10** and the second grid **20** connected by the at least two side elements **32** is also protected against impact of heavy articles such as stone or gravel by the first and the second grid **10** and **20.** The first grid **10** and the second grid **20** can move relative to each other. For example, the first grid **10** and the second grid **20** can be linearly moved relative to each other in axial direction. To achieve relative linear motion between the first grid **10** and the second grid **20,** each of the at least two side elements **32** connecting the first grid **10** to the second grid **20** is configured to be of telescopic or sliding configuration. More specifically, each side element **32** includes two elements, one connected to the first grid **10** and the other connected to the second grid **20** and each capable of moving relative to the other in telescopic or sliding manner. Alternatively, the first grid **10** and the second grid **20** are capable of being angularly moved relative to each other by virtue of at least one hinge joint formed there-between. According to yet another embodiment, the first grid **10** and the second grid **20** are capable to swivel relative to each other by virtue of at least one swivel joint formed there-between. However, the present invention is not limited to any particular arrangement permitting relative movement between the first grid **10** and the second grid **20.** The protection device **110** of the protection system **100** also includes an opening along at least a portion of the periphery thereof for entry of the filter **40** into the cavity **30** and removal of the filter out of the cavity **30.** Preferably, the first grid **10** and the second grid **20** that are spaced apart from each other are connected to each other from all sides by the side elements **32** except the top sides as illustrated in **FIG 2****.** The unconnected top sides of the first grid **10** and the second grid **20** serves as the opening for receiving the filter **40** into the cavity **30** and removing the filter **40** from the cavity **30** and the bottom element connecting the bottom sides of the first grid **10** and the second grid **20** supports the filter **40** thereon. However, the opening can also be formed along other sides of the protection device **110** of the protection system **100.**

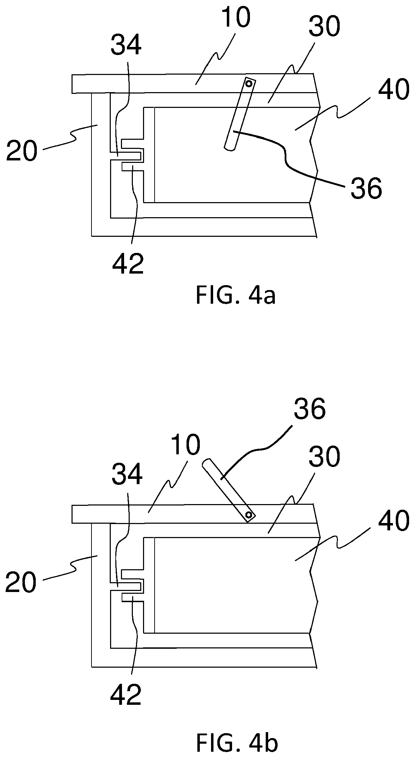

Further, the protection device **110** of the protection system **100** includes other provisions for easy insertion and removal of the filter **40** into the cavity **30.** Generally, at least one of the first grid **10,** the second grid **20** and the side elements **32** includes at least one guide element **34** to guide receiving of the filter **40** inside the cavity **30.** The filter **40** includes an engagement element **42** that is complimentary to and interacts with at least one guide element **34** formed on the protection device **110.** Such interaction between the at least one guide element **34** and the complimentary engagement element **42** ensures smooth guiding of the filter **40,** while the filter **40** is inserted into the cavity **30** and while the filter **40** is removed from the cavity **30.** In one example, the at least one guide element **34** is configured on the first grid **10** as illustrated in **FIG. 3****.** Alternatively, the at least one guide element **34** is configured on the second grid **20** as illustrated in **FIG. 4a****.** Further, the at least one guide element **34** can also be formed on the side elements **32** connecting the first grid **10** and the second grid **20** of the protection device **110** of the protection system **100.** Instead on the guide element **34** being formed on at least one of the first grid **10,** the second grid **20** and the side elements **32** and the complimentary engagement element **42** being formed on the filter **40,** the engagement element **42** can be formed on at least one of the first grid **10,** the second grid **20** and the side elements **32,** whereas the complimentary guide element **34** can be formed on the filter **40.** However, the present invention is not limited to any particular configuration and placement of the at least one guide element **34** and the complimentary engagement element **42** as far as these are capable of interacting with each other and guiding entry of the filter **40** into the cavity **30** and removal of the filter **40** out of the cavity **30.** Further, the filter **40** includes a pulling element **44** to pull out the filter **40** out of the cavity **30.** With at least one of the provision of opening for entry and removal of the filter **40** with respect to the cavity **30,** the at least one guide element **34** and permitting relative movement between the first grid **10** and the second grid **20,** convenient and quick access to the filter **40** received in the cavity **30** is made possible. Such a configuration of the protection system **100** makes servicing of the filter **40** received in the cavity **30** quick and convenient as compared to conventional protection system that required removal of the protection grid of the conventional protection system to access the filter disposed between the protection grid of the conventional protection system and the heat exchanger.

Considering the dynamic conditions of the vehicle on which the protection system **100** with the filter **40** held in the cavity **30** formed in the protection device **110** is mounted, the protection device **110** is provided with at least one retaining element **36** to retain the filter **40** inside the cavity **30.** The at least one restraining element **36** is mounted on at least one of the first grid **10,** the second grid **20** and the side elements **32** and is disposed at an entrance to the cavity **30.** The at least one restraining element **36** is capable of being swiveled between a blocking configuration as illustrated in **FIG. 4a** and an unblocking configuration as illustrated in **FIG. 4b****.** In the blocking configuration, the at least one restraining element **36** blocks the entrance to the cavity **30** to prevent the filter **40** from getting displaced or coming out of the cavity **30** once the filter **40** is received inside the cavity **30.** In the unblocking configuration, the at least one restraining element **36** is swiveled away from the entrance to the cavity **30** to allow passing of the filter **40** through the entrance of the cavity **30,** while the filter **40** is being inserted into the cavity **30** or while the filter **40** is being removed from the cavity **30.**

Generally, the side elements **32** connecting the first grid **10** and the second grid **20** of the protection device **110** of the protection system **100** are adjustable to adjust spacing between the first grid **10** and the second grid **20.** With such configuration, the dimension of the cavity **30** can be adjusted to receive the filter **40** of different dimensions. More specifically, by adjusting the spacing between the first grid **10** and the second grid **20,** the width of the cavity **30** can be adjusted to receive filter of different widths. Such configuration of the protection system provides the flexibility to the protection device **110** to be used for different widths of filters.

A heat exchanger assembly **300** is disclosed in accordance with an embodiment of the present invention. The heat exchanger assembly **300** includes a heat exchanger **200** and a protection system **100** for the heat exchanger **200.** The protection system **100** includes a protection device **110.** The protection device **110** includes a first grid **10** and a second grid **20.** The first grid **10** is disposed upstream of the heat exchanger **200** in the direction of ram air and is in contact with at least a portion of the heat exchanger **200.** The second grid **20** is mounted in a spaced apart configuration with respect to the first grid **10** and upstream of the first grid **10** in the direction of ram air to form a cavity **30** there between. The cavity **30** receives a filter **40** therein. The second grid **20** protects the heat exchanger **200** and the filter **40** from impact of an article projected thereat.

In accordance with another embodiment, the protection system **100** includes a protection device **110.** The protection device **110** includes at least one grid **10, 20** of micro-fiber material that is in contact with at least a portion of the heat exchanger **200** and acts as filter for filtering air crossing there through. The filter **40** is integrally formed with the grid **10, 20.** With such configuration of the protection device **110,** the grid **10, 20** performs the function of the filter as well. The grid **10, 20** of micro-fiber material should exhibit sufficient strength to withstand impact energy of articles striking the first grid **10, 20.** With such configuration, the number of components and the number of mounting elements is reduced.

There is also disclosed a heat exchanger assembly **300** in accordance with another embodiment of the present invention. The heat exchanger assembly **300** include a heat exchanger **200** and a protection system **100.** The protection system **100** includes a protection device **110.** The protection device **110** includes at least one grid **10, 20** of micro-fiber material that is in contact with at least a portion of the heat exchanger **200** and acts as filter for filtering air crossing there through.

Several modifications and improvement might be applied by the person skilled in the art to the protection system **100** as defined above and such modifications and improvements will still be considered within the scope and ambit of the present invention, as long as the protection system includes a first grid and a second grid. The first grid is disposed upstream of a heat exchanger in direction of ram air. The second grid is mounted in a spaced apart configuration with respect to the first grid to form a cavity there between. The cavity receives a filter therein. The second grid further protects the heat exchanger as well as the filter from impacts.

## Claims

1. A heat exchanger protection system (100) comprising a heat exchanger (200), a protection device (110) and a filter (40), the protection device (110) comprising at least one grid (10, 20) disposed on an upstream side of the heat exchanger (200) in direction of ram air and in contact with the heat exchanger (200), the filter (40) being in contact with the grid (10, 20).

2. The heat exchanger protection system (100) as claimed in the claim 1, wherein the protection device (110) comprises:
• a first grid (10) disposed upstream of the heat exchanger (200) in direction of ram air and in contact with at least a portion of the heat exchanger (200);
• a second grid (20) adapted to be mounted in a spaced apart configuration with respect to the first grid (10) to form a cavity (30) there between, the cavity (30) adapted to receive the filter (40) therein, the second grid (20) further being adapted to protect the heat exchanger (200) and the filter (40) from impact of an article projected thereat.

3. The heat exchanger protection system (100) as claimed in the claim 2, wherein the first grid (10) and the second grid (20) are adapted to be linearly moved relative to each other.

4. The heat exchanger protection system (100) as claimed in the claim 2, wherein the first grid (10) and the second grid (20) are adapted to be angularly moved relative to each other by virtue of at least one hinge joint formed there-between.

5. The heat exchanger protection system (100) as claimed in the claim 2, wherein the first grid (10) and the second grid (20) are adapted to be swivel relative to each other by virtue of at least one swivel joint formed there-between.

6. The heat exchanger protection system (100) as claimed in any of claims 2 to 5, wherein at least one of the first grid (10) and the second grid (20) comprises a plurality of mounting elements (12) adapted to mount at least one of the first grid (10) and the second grid (20) over the heat exchanger (200).

7. The heat exchanger protection system (100) as claimed in any of claims 2 to 6, wherein at least one of the first grid (10), the second grid (20) and the heat exchanger (200) comprises at least one support element (14) for supporting at least one of the first grid (10) and the second grid (20) on the heat exchanger (200).

8. The heat exchanger protection system (100) as claimed in any of claims 2 to 7, wherein the protection device (110) further comprises an opening along at least a portion of the periphery thereof for entry of the filter (40) into the cavity (30) and removal of the filter (40) from the cavity (30).

9. The heat exchanger protection system (100) as claimed in any of claims 2 to 8, further comprising at least one retaining element (36) adapted to retain the filter (40) inside the cavity (30).

10. The heat exchanger protection system (100) as claimed in any of claims 2 to 9, further comprising at least two side elements (32) axially extending from sides of at least one of the first grid (10) and the second grid (20) to detachably connect the first grid (10) to the second grid (20) and maintain the first grid (10) and the second grid (20) in spaced apart configuration.

11. The heat exchanger protection system (100) as claimed in claim 10, wherein the at least two side elements (32) are adjustable to adjust spacing between the first grid (10) and the second grid (20).

12. The heat exchanger protection system (100) as claimed in any of claims 10-11, wherein at least one of the first grid (10), the second grid (20) and the side elements (32) comprises at least one guide element (34) to guide receiving of the filter (40) inside the cavity (30).

13. A heat exchanger assembly (300) comprising:
• a heat exchanger (200); and
• a heat exchanger protection system (100) comprising a protection device (110), said protection device (110) comprising at least one grid (10, 20) in contact with at least a portion of the heat exchanger (200), the grid (10, 20) being of micro-fiber material adapted to act as filter for filtering air crossing there through.
